# EUROPEAN PATENT SPECIFICATION

(11) **EP 1 793 569 B1**
(45) Date of publication and mention of the grant of the patent: **03.10.2012**
(21) Application number: 07002178.7
(22) Date of filing: 23.12.2002
(51) Int. Cl.: H04M 1/57, H04M 1/725, H04M 1/2745

(54) **USER INTERFACE AND METHOD OF VIEWING UNIFIED COMMUNICATIONS EVENTS ON A MOBILE DEVICE**
BENUTZERSCHNITTSTELLE UND METHODE ZUM ANZEIGEN VON VEREINHEITLICHTEN KOMMUNIKATIONSERREIGNISSEN AUF EINEM MOBILGERÄT
INTERFACE D'UTILISATEUR ET PROCÉDÉ D'AFFICHAGE D'ÉVÉNEMENTS DE COMMUNICATION UNIFIÉS SUR UN DISPOSITIF MOBILE

(30) Priority: 26.12.2001 US 342130 P
(43) Date of publication of application: 06.06.2007
(62) Divisional of application: 02787317.3
(73) Proprietor: Research In Motion Limited, Waterloo, ON N2L 3W8 (CA)
(72) Inventor: Maguire, Michael, London W4 1ED (GB); Zinn, Ronald Scotte, Waterloo Ontario N2G 1Z5 (CA)
(74) Representative: Howson, Richard G.B.

(56) References cited:
- EP-A- 0 809 411
- EP-A- 0 920 168
- EP-A- 0 967 773
- EP-A- 1 148 423
- EP-A- 1 246 483
- US-A- 6 064 725
- US-A1- 2001 012 347

## Description

This invention relates generally to a user interface for messaging. More particularly, the invention relates to user interfaces for displaying a communications event in context with select stored communications events.

Most cellular networks such as Code Division Multiple Access (CDMA) and Global Service Mobile (GSM) networks support data services in addition to standard telephony based services. Short Messaging Service (SMS) and Wireless Application Protocol (WAP) are data centric services available on many cellular networks. Data networks, such as MobiTex^{™}, Datatac^{™}, as well as advanced networks such as General Packet Radio Service (GPRS), Universal Mobile Telecommunications System (UMTS), Enhanced Data for GSM Enhancement (EDGE) and 1X that overlay cellular networks, allow an appropriately configured mobile device to offer data services such as e-mail, web browsing, as well as SMS and Multimedia messaging service (MMS) messaging, and WAP data sessions.

Communications events include telephone calls, both sent and received, SMS messages both sent and received, e-mail correspondences both sent and received, and wireless application protocol sessions, among other data based transactions. Each communications event has at least two parties, the user of the mobile device and at least one correspondent. Each correspondent can have multiple contact addresses, such a work phone number, a home phone number, a mobile phone number, an SMS address, and a plurality of email addresses.

Mobile devices were originally intended to provide telephony services, and have, with the addition of data centric features, become complex to operate. The user interfaces currently available for viewing the history of communications events on a mobile device, typically only enable a user to view a history of one type of communications events, or a subset thereof, and from that history view the contents of a communications event. This makes sense in a voice only environment, but the addition of data services has exposed this interface paradigm as insufficient.

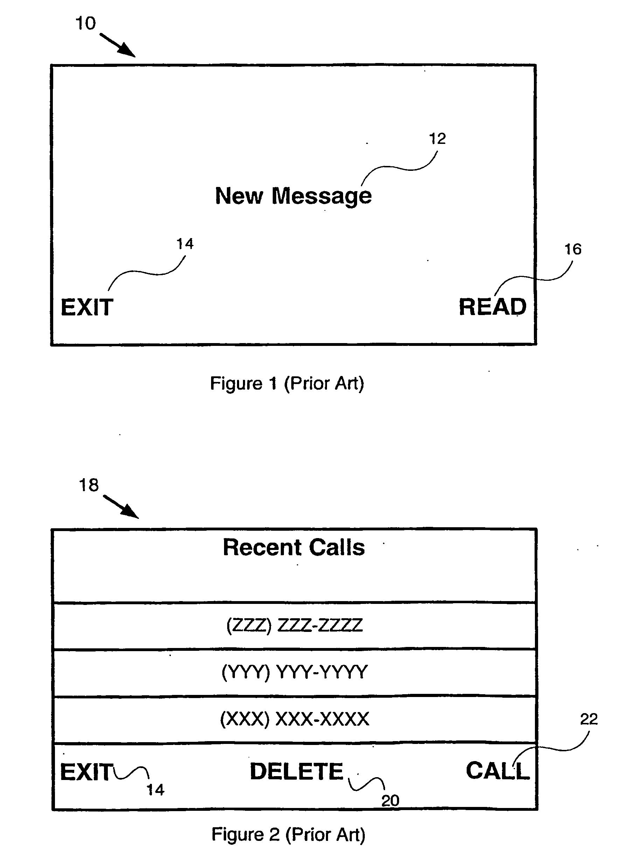

Figure 1 illustrates a user interface **10** of the prior art. User interface **10** displays a notification **12** that a new message, such as an e-mail or SMS message has been received. The user of the mobile device is presented with the option to either exit the notification **14,** or read the received message **16.** This user interface does not permit the user to view the context in which the received message should be interpreted.

Figure 2 illustrates a second user interface of the prior art **18.** User interface **18** illustrates a list of recent telephone calls. Once again the user is presented with the option to exit **14,** and additionally is given the option to place a call **22** to one of the recent callers, or to delete **20** a caller from the list of recent calls. Call lists of this type provide either separate lists of sent and received calls, or provide an integrated list of sent at received calls.

Presently, when a mobile device receives an incoming communications event, such as an SMS message, the only information provided to the user is that an SMS message has been received. This notification may indicate the originating SMS address. The user can then either view the SMS message, or scroll through a collective in-box of SMS messages to determine the last SMS message received from the same originating address. If the user wishes to view the last SMS message sent to the party originating the incoming SMS message, the user must check the SMS out box on the mobile device. Additionally, if the user would like to check to see when the last call made to the SMS originating address, or received from the originating SMS address occurred on, the user must check either the incoming or outgoing call logs. If email services are integrated in the mobile device, an additional list must be examined. This provides a plurality of different lists that a user must examine to determine the communications event history concerning a correspondent. If a correspondent has multiple contact addresses, viewing all communications events with the correspondent is further complicated.

It is, therefore, desirable to provide a method and system, for handling communications events in a manner that provides the user of a mobile device with the context of the communications event through a presentation of the communications event history associated with a given correspondent.

EP 0 967 773 (NEC Corporation, Tokyo) discloses a telephone terminal with means for administrating a communication history. The telephone terminal includes a memory section for memorising a call telephone number as a communication telephone number on call and for memorising a reception telephone number as the communication telephone number on reception. The memory section further memorises communication information in correspondence to the communication telephone number and the communication information and telephone number are displayed on a display section.

In a first aspect, the present invention provides a method of handling a communications event in a mobile device having a user interface. The method includes identifying, in a communications event database, a correspondent associated with the communications event, retrieving, from the communications event database, a communications event history associated with the correspondent and controlling the user interface to provide the retrieved communications event history to a user.
In an embodiment of the first aspect of the present invention, the step of identifying is preceded by the step of determining a communications event type for the communications event, where the communications event type of the communications event is selected from a list including telephony based voice communications events, e-mail communications events, short messaging service communications event and wireless applications protocol communications event. In another embodiment of the present invention, the communications event is an incoming communications event, and the method further includes the step of receiving the incoming communications event prior to identifying the correspondent. In another embodiment of the present invention, the user interface is a display, and the step of controlling the user interface includes displaying the retrieved communications event history on the display. In yet a further embodiment of the present invention, the method includes adding the incoming communications event to the communications event history in the communications event database. In embodiments of the present invention, receiving an incoming communications event and identifying the correspondent includes one of receiving a telephony based phone call and extracting a phone number from call display information, receiving an incoming email message and extracting an email address from the header of an email message and receiving an incoming short messaging service (SMS) message and extracting an originating address from a SMS message. In a further embodiment of the present invention, identifying the correspondent further includes cross referencing one of the extracted phone number, the extracted email address and the extracted originating address, with entries in an address book accessible to the mobile device. In yet a further embodiment of the present invention the method includes the step of controlling the user interface to provide the user with communications event handling options, where controlling the user interface can include providing the user an option to either ignore or answer an incoming telephony based call, or read or ignore one of the incoming email message and the incoming SMS message. Another embodiment of the present invention includes updating the communications event database to reflect a status of the incoming communications event after providing the user with communications event handling options.

In a second aspect of the present invention, there is provided a mobile device, having a user interface and a transceiver for transmitting and receiving communications events. The mobile device includes a communications event database, and a communications event handler. The communications event database is for storing a communications event history associated with a correspondent. The communications event handler is in communication with the communications event database for retrieving from the communications event database the communication event history in response to a communications event, and is for controlling the user interface to provide the retrieved communication event history to a user.

In an embodiment of the second aspect of the present invention, the communications event handler includes a communications event type identifier for identifying the type of the communications event from a list including telephony based voice communications events, e-mail communications events, short messaging service communications event and wireless applications protocol communications event. In another embodiment of the second aspect of the present invention, the user interface is a display, and the communications event handler includes a display controller for controlling the display to display the retrieved communication event history. In another embodiment of the present invention, communications event handler includes a correspondent identifier for identifying the correspondent of an incoming communications event, and the correspondent identifier is connected to the transceiver for receiving call display information, and includes means for identifying the correspondent of an incoming communications event based on the received call display information, and includes header parsing means for parsing the header of one of a received email message and a received SMS message to extract an originating address, and includes means for identifying the correspondent of an incoming communications event based on the extracted originating address. In a further embodiment, correspondent identifier includes an address book interface for cross referencing the received call display information and the extracted originating address with entries in an address book accessible to the mobile device to identify the correspondent. In yet another embodiment of the second aspect of the present invention, the communications event handler includes a user interface controller for controlling the user interface to provide a user with communications event handling options and also includes means for updating the communications event database to reflect the status of an incoming call.

In a third aspect of the present invention, there is provided a communications event handler for integration in a communication device having a user interface. The communications event handler includes a database interface and a user interface controller. The database interface is for communicating with a communications event database to retrieve a communications event history associated with a correspondent in response to a communications event. The user interface controller is for receiving the retrieved communications event history from the database interface, and for controlling the user interface to provide the retrieved communication event history to a user.

Other aspects and features of the present invention will become apparent to those ordinarily skilled in the art upon review of the following description of specific embodiments of the invention in conjunction with the accompanying figures.

### BRIEF DESCRIPTION OF THE DRAWINGS

Embodiments of the present invention will now be described, by way of example only, with reference to the attached Figures, wherein:
Figure 1 illustrates a communications event handling system of the prior art;
Figure 2 illustrates a communications event history listing of the prior art;
Figure 3 is a flow chart illustrating a method of the present invention;
Figure 4 is a flow chart illustrating an alternate method of the present invention;
Figure 5 illustrates an exemplary system of the present invention;
Figure 6 illustrates a data flow for a mobile device of the present invention; and
Figure 7 illustrates a data flow for a mobile device of the present invention.

### DETAILED DESCRIPTION

Generally, the present invention provides a method and system for tracking originating, and received, communications events on a mobile device. By tracking received and transmitted communications events, a mobile device can provide a user with the context of the communication with any party.

In the present invention a mobile device provides an integrated user interface through which a user can view communications events in which a particular correspondent has partaken. A mobile device of the present invention makes use of a communications event database to track all incoming and outgoing communications events with various correspondents.

The present invention provides a unified view of communications events, so that a user can determine the context of any received communications event, or can determine the context of a communications event to be placed. Thus, upon receipt of a SMS message, or other communications events, after identifying the type of the communications event, in addition to notifying the user that a message has been received, the mobile device will present the user with a listing of the most recent communications events that are associated with the originating address of the message. The user is also given the option of viewing information about the prior communications events, which would include viewing prior SMS messages, viewing information about the data received for a wireless application protocol browsing session, or the call length and dates of any placed or received calls. This information will allow the user to better contextualise the content of the new message. In a presently preferred embodiment, the user is able to set criteria that must be matched by the properties of an incoming communications event in order for the retrieval of the communications event history to begin. This allows the user the ability to only be presented with a communications event history for selected correspondents, and selected types of communications events.

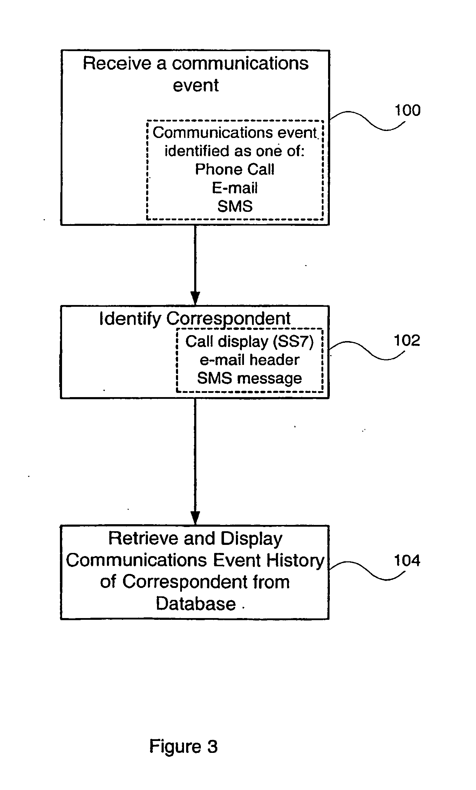

Figure 3 illustrates an exemplary method of the present invention. In step 100, the mobile device receives a communications event. Preferably, as a part of receiving the communications event in step **100,** the mobile device identifies the communications event as one of a set of known communications event types including a phone call, an e-mail message and an SMS message, among other known types of communications events. Upon receipt of the communications event, the mobile device identifies the correspondent in the communications event in step **102.** The identification of the correspondent is preferably carried out using call display, a signalling system 7 (SS7) type feature if the communications event is a phone call, through an analysis of an e-mail header if the communications event is an e-mail message or through parsing the header information in a SMS message. Upon identifying the correspondent in step **102,** the mobile device uses the correspondent's identification to retrieve and display a communications event history detailing the communications event the correspondent has been involved with in step 104. The communications event history retrieved in step **104** is typically retrieved from a database either in the mobile device, or accessible to the mobile device, that is used to track communications events. Upon retrieval of the communications event history from the database, the mobile device displays the communications event history to the user. Preferably, the displaying of the information to the user allows the user to view prior SMS and e-mail messages to determine the context of a received message. Additionally, the user is preferably able to view a listing of all sent and received calls involving the correspondent along with the time and date at which the call occurred, the length of the call if the call was answered, and an indication if the call was or was not answered. In a presently preferred embodiment of the present method of the invention, the mobile device displays a summary of communications events with the correspondent that both originated from, and were received by the mobile device. It is, however, fully contemplated that in certain embodiments the user is presented with only incoming, or outgoing communications events in the summary. It is preferable that the user be provided with an option to view incoming and outgoing messages on a single display, only incoming messages, or only outgoing communications events.

One skilled in the art will readily appreciate that when the mobile device of the present invention receives a communications event in step 100 the communications event can be any of a number of event types. Typically, upon receiving a communications event in step **1**00, the mobile device analyses the incoming event and determines its specific type. This determination of the communications event type can be performed in numerous ways understood by those skilled in the art. One such method involves determining the communications event type based on the channel over which the communications event was received. For example, if the device supports GSM communications as well as GPRS communications, and the mobile device is capable of supporting voice, SMS, e-mail and WAP type communications events, a communications event received over a GPRS communications channel will be either a WAP or e-mail based communication, whereas a communications event received over the GSM communications channel will be either an SMS or voice type communications event. After narrowing the selection to the two choices based on the communications channel, the mobile device can parse the header associated with the incoming communications event to determine its specific type. For example, a WAP data session and an email message typically conform to different standard formats, and based on an analysis of the format, a determination can be made. The differentiation between an SMS message and a telephony based voice communications event is known in the art, and can be easily implemented. It is envisioned that on advanced networks all data and voice traffic will be carried on the same channel, much as both voice and data are carried in a Voice-over-IP data network. In such a network, header information associated with datagrams, or other data units, provide identification of the different types of communications event. One skilled in the art will readily appreciate that a number of alternate method can be implemented without departing from the scope of the present invention.

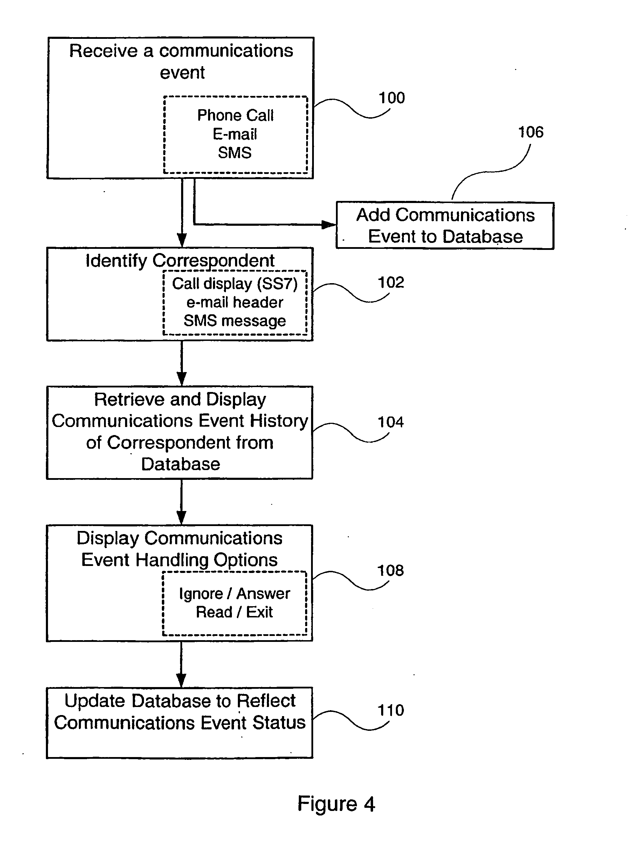

Figure 4 illustrates a further embodiment of the method of Figure 3. In the method illustrated in Figure 4, steps **100, 102,** and **104** remain the same. Additionally, in step 106 after a communications event has been received the communications event is added to the database of the mobile device. This step can be performed at any point in the process, and is shown as following the receipt of the communications event as a matter of preference. In step **108,** the mobile device presents a user interface that allows the user to either ignore or answer an incoming telephone call, or alternatively to either read a message or exit the notification in the case of a received SMS, or e-mail message. It is preferable that these options be presented along with the retrieved communications event history, so that the user can make a decision as to what to do with the incoming communications event based on the event history. In step **110,** the database is updated to reflect the communications event status.

As described above, the user interface preferably indicates to the user whether or not a SMS or e-mail message has been read, or replied to, and whether or not a call was answered. These factors are collectively described as the status of a message. In step **110,** the database is updated to reflect whether or not the user chose to ignore or answer a call in step **108,** or whether the user chose to read the message or exit the notification in step **108.** In a presently preferred embodiment, the identification of the correspondent in step **102** is preformed by cross-referencing the information obtained through either call display, the analysis of the e-mail header, or the analysis of the SMS message to determine the originating address from which the communications event was placed, with information contained in an address book accessible to the mobile device. It is common for numerous correspondents to have a variety of contact addresses, including telephone numbers corresponding to cellular phones, home phones, and office phones, as well as a plurality of e-mail, and SMS addresses. Through cross-linking of the correspondent identification information obtained in step **102** with the address book of the mobile device, it is possible to provide the user of the mobile device with a communications event history that includes all correspondence, and telephone calls made to, or answered from the identified correspondent.

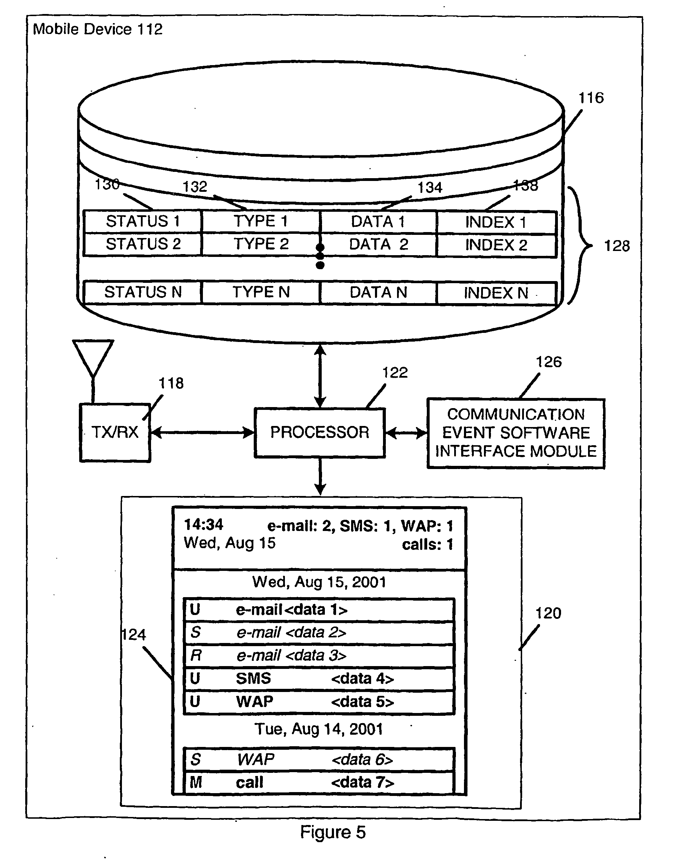

Figure 5 illustrates an embodiment of mobile device **112** according to the present invention. Mobile device **112** preferably includes database **116,** transceiver **118,** processor **122,** and display **120.** In alternate embodiments of the present invention, mobile device **112** does not include database **116,** and instead accesses a central server which hosts database **116** through a wireless link. In additional embodiment, mobile device **112** either includes an address book having a plurality of contact addresses for a variety of correspondents, or has access to such an address book using a wireless connection. Communications event software interface module **126** is preferably a software application executed by processor **122,** and is a specific example of a communications event handler according to the present invention. It is contemplated that the communications event handler can be implemented as a separate hardware component, which may or may not implement software based routines. In a further embodiment, the communications event handler can be hardware enabled and integrated with processor **122.**

Database **116** is preferably structured to have at least one table **128.** In table **128,** four data fields are identified. The first identified data field is status **130.** Status field **130** indicates whether or not an e-mail or SMS message has been read, or whether or not a telephone call was answered. Type field **132** denotes the type of communications event of the record. Type **132** is used to identify whether the communications event was an e-mail message, a telephone call, or an SMS message. In a presently preferred embodiment, the type field also indicates whether the communications event originated from, or was received by mobile device **112.** The third entry in table **128** is data field **134.** The data field **134** contains information about the communications event of this record. In a presently preferred embodiment, the data field for a SMS or e-mail message would include the body of the message. For a telephone call, in a presently preferred embodiment, data field **134** would indicate the time that the call was placed, and the duration of the call. The final field of Table **128** is index **138.** One skilled in the art will readily appreciate that a number of indexing mechanisms can be employed in either relational, or flat file, database types. The use of index **138** is to be able to easily identify and find a record related to a specific call. One skilled in the art will recognize that a number of entries in this Table will be introduced as the mobile device **112** begins communications events with various correspondents. One skilled in the art will recognize that in conjunction with an address book accessible by mobile device **112,** the index field **138** and status field **130** can be correlated to determine a communications event history for a number of different correspondents. Transceiver **118** is used to both transmit and receive communications events. Upon receipt of a communications event, transceiver **118** begins to pass data to processor **122.** In conjunction with communications event software interface module **126,** processor **122** performs the method illustrated in Figure 3. As a result, processor **122** interacts with display **120** upon receipt of a communications event and after querying database **116.** Thus, processor **122** uses display **120** to provide interface **124.** Interface **124** illustrates a date and time, as well as the number of e-mail, SMS, WAP, and telephone call type communications events between the mobile device and the correspondent. As is illustrated in interface **124,** the status field **130,** the type field **132,** and data field **134** of table **128** are used to provide the user with an indication that unread mail messages exist, sent mail messages, received mail messages and placed calls have been made between the mobile device and the correspondent.

Transceiver **118** can be replaced by separate transmitters and receivers, and is intended to allow the mobile device to receive communications over a wireless link. Presently preferred embodiments of the present invention employ transceivers capable of receiving CDMA voice communication as well as 1X data communications, in an alternate embodiment, the transceiver is designed to receive GPRS, and GSM data and voice services, respectively. One skilled in the art will readily appreciate that a transceiver capable of receiving a variety of other combinations of voice and data protocols are contemplated in the present invention.

Display **120** is preferably a liquid crystal display, and may optionally be a touch sensitive liquid crystal display, so that a user can be provided with user interface acknowledgement buttons on the screen of the device itself. Implementations of graphical interfaces on liquid crystal displays, and touch sensitive liquid crystal displays will be well understood by those skilled in the art of mobile device design. It is fully contemplated that though mobile device **112** has been described herein as having display **120,** that display **120** can be replaced with other user interfaces. Examples of such user interfaces include audio interfaces and dynamic Braille pads for use by individuals with visual impairments.

Processor **122** is connected to the database **116,** and is capable of performing database queries on database **116** to obtain information from the call event database **116.** Additionally, processor **122** is connected to an address book so that the identified correspondent from step **102** can be cross-referenced to the address book and match to a name in the address book. This will allow mobile device **112** to provide the user with a call event history from the call event database **116** that includes all communications events in which the identified correspondence has partaken, regardless of the communication address used by the correspondent. Upon identifying the correspondent through cross-referencing the address book, processor **122** queries communications event database **116** to obtain a listing of all communications events between the user of the mobile device and the identified correspondent. The results of this query are then formatted and provided to the user on display **120.**

In a presently preferred embodiment of the system illustrated in Figure 4, the communications event software interface module **126** includes a communications event type identifier. The identifier is for determining the type associated with the communications event. The identified type is stored in type field **132** in database **116.** In the illustrated embodiment, the identifier is preferably a software routine, and in a more generic implementation is a module in the communications event handler.

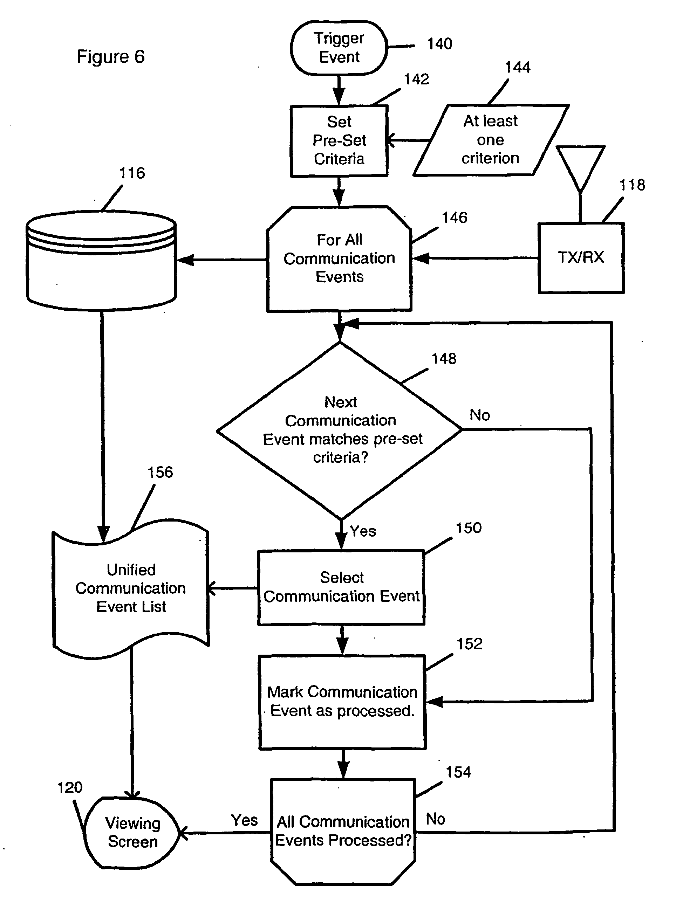

Figure 6 illustrates an exemplary embodiment of a data flow of the present invention. A pre-defined trigger event **140,** such as an incoming SMS message is used as a preset criterion **142.** At least one criterion **144** is set in the preset criteria **142.** The at least one criteria **144** may be communication from a specific party. In this case, preset criteria **142** would correspond to both the triggered event, the receipt of a SMS message, and the at least one criterion **144,** correspondence with a given individual. This would set the preset criteria **142** as correspondence with a certain individual via a SMS message. Preset criteria **142** is used, in a presently preferred embodiment, so that only communications events fitting a predefined profile will results in the retrieval of a communications event history from database **116.** In alternate embodiments of the present inventions, all communications events will result in the retrieval of a communications event history from database **116** using a method, such as the one illustrated in Figure 3. Transceiver **118** is used by mobile device **112** to receive a communications event. Upon receipt of any communications event the preset criteria is compared to the received communications event. If the preset criteria **142** and the received communications event from transceiver **118** match, the process proceeds through the flow to decision **148,** where a determination is made of whether or not the communications event matches the preset criteria. If the communications event matches the preset criteria, mobile device **112** proceeds to step **150** where the selected communications event is added to the unified communications event list in step **156,** which is stored in database **116.** At this point, mobile device **112** marks the communications event as processed in step **152.** If the next communications event did not match the preset criteria in decision **148,** mobile device **112** would have proceeded to mark the communications event as processed **152** without selecting the communications event and adding it to the unified communications event list **156.** Following the marking of the communications event as processed in step **152,** a decision is made as to whether or not all communications events have been processed in decision **154.** If all outstanding communications events have not been processed, mobile device **112** returns to step **148.** Otherwise, in conjunction with the unified communications event list 156, which is obtained from database 116, user interface 124 is provided on display 120.

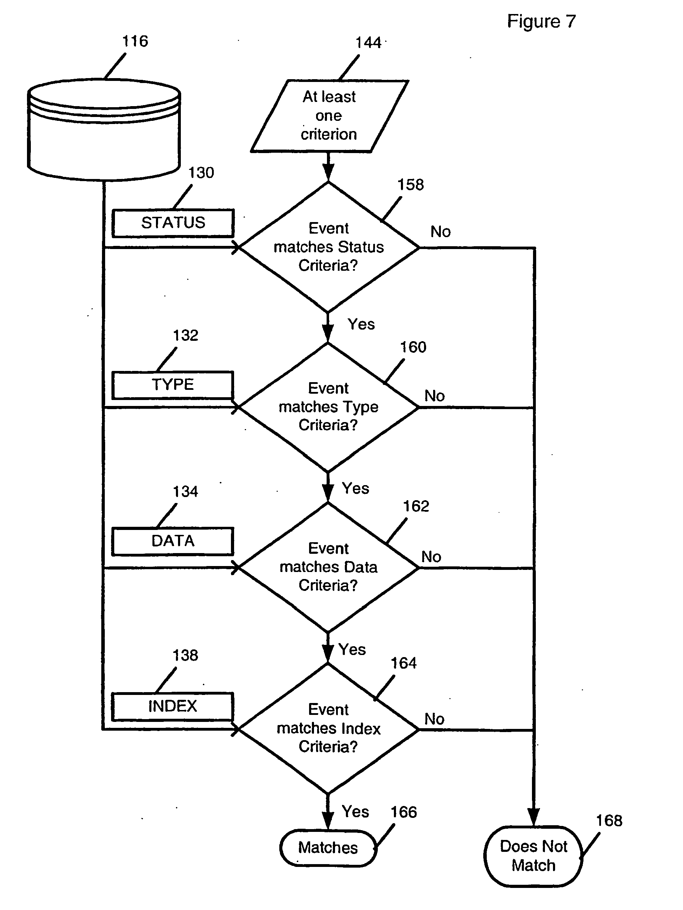

The comparison as illustrated, in Figure 6, to determine whether or not a set of criteria has been matched, will now be illustrated in Figure 7 in greater detail with reference to the embodiment of the table 128 as shown in Figure 5. Figure 7 illustrates database 116 which has contains table 128 having fields for status 130, type 132, data 134 and an index 138. The at least one criteria 144 is predetermined by the user. Upon receipt of an incoming communications event, the at least one criteria is compared to the status 130, type 132, data 134, and index 138 of the incoming communications event. If the event matches the status criteria in 158, it is then compared to the type criteria in step 160. If in step 160, the event matches the type criteria, it is further compared to the data criteria in 162, and pending successful completion of the event matching the data criteria, the event is matched to the index criteria in step 164. If in any of the comparisons 158, 160, 162 or 164, the event is not matched to one of the criteria, mobile device 112 proceeds to a does not match state 168. If all of these comparisons are successful, mobile device 112 proceeds to a match state 166. Upon reaching a match state 166, processor 122 queries database 116 to retrieve the communications event history. If does not match state 168 is reached, processor 122 waits for the next communications event. The order as implied by Figure 7 is not a required order, and the comparisons can be carried out in any order or in parallel. The presently illustrated order was selected for simplicity, and is to be considered merely exemplary in nature.

As described above, a presently preferred embodiment of the present invention cross-links the correspondent identification information with information contained in an address book accessible to mobile device 112. This allows the address book information to be used to link SMS addresses, telephone numbers for cellular, home and work phones, a plurality of e-mail addresses, and WAP accessible sites associated with a single individual or entity, to each other. This cross-linking of address based information allows a user to properly put in context all communication with the individual from whom a message has been received.

In many mobile devices **112,** the ability to integrate with a centralized e-mail server, using such standard protocols as the point of presence (POP) protocol is used to provide a seamless transition between the mobile device **112** and the central e-mail account. In this case, a user of the mobile device **112** is able to reply to e-mail messages from either a desktop computer, or mobile device **112** seamlessly. In a presently preferred embodiment, the mobile device **112** is updated through contact with a central server to reflect that e-mail messages replied to from the desktop have been replied to. Thus, the user of the mobile device **112** will be able to completely determine the context of a received message.

In an exemplary embodiment, all communications events including messages and calls originating from the mobile device, messages received and sent from a desktop computer, and all other communications events accessible to the mobile device are stored in a database **116.** Database **116** is preferably integrated with the mobile device **112,** though it is fully contemplated that database **116** can reside in a central server and be accessed wirelessly by mobile device **112.** The implementation of such a system will be well understood by those skilled in the art.

The database **112** preferably tracks the type **132** of communications event, the data **134** contained in the communications event, and preferably a status **130** of the event. The type of the event **132** typically denotes whether it was a telephone call, a SMS message, an e-mail message, a WAP data transmission, or other data based transaction. The type field **132** also indicates whether the communication was received by the user of the mobile device, or originated from the user of the mobile device. The data field **134** typically contains the body of an e-mail message, the body of a SMS message, information related to the WAP data transmission, or call length, as appropriate. The status **130** of the message typically indicates whether a placed or received call was answered, or if a received message was replied to. One skilled in the art will readily appreciate that it is preferable to index this data with an index field **138,** however, the implementation of an index is purely optional, though understood by one skilled in the art. Thus, in operation, a mobile device **112** of the present invention will receive a communications event and prior to displaying notification of this event, be it an e-mail message, a SMS message, or a telephone call, the processor of the mobile device queries the database **116** using the calling number as a key. The calling number is typically transmitted to the processor of the mobile device using such services as call display, or visual call waiting, which will be well understood to those skilled in the art. The query to the database **116** using the incoming number or address, as a search perimeter will result in a query response containing a list of all communications events between the mobile device **112** or any account associated with mobile device **112,** and the incoming address. This information is then presented to the user on the display **120** of the mobile device so that prior to answering a telephone call the user will know the date of the last communication. Alternatively, if a received SMS message is generating the notification, the user is provided with the context of the SMS message as a result of being able to view prior SMS messages, prior e-mail messages, and is also presented with the dates of the last call initiated to the SMS originating address.

In a presently preferred embodiment, the communications event history retrieved from database **116** is sorted chronologically, so that the newest information is presented at the top of the list. Additionally, a summary of the number of e-mail messages, SMS messages, WAP sessions, and telephone calls between the mobile device **112** or any account associated with it, and the party originating the message is presented.

One skilled in the art will readily appreciate that database **116** can be either a relational database, or a flat file database. Although the use of a relational database provides numerous benefits understood by those skilled in art, it is conceivable that an implementation of the present invention can be provided through the use of a flat file database. Additionally, one skilled in the art will readily appreciate that a number of methods of implementing the present invention using a relational database exist. For exemplary purposes, one such method is presented. It should be understood by those skilled in the art, that the presented method is intended to be exemplary, and not limiting of the scope of the present invention.

In a non-illustrated embodiment, any event, regardless of whether it is a communications event or any other event detectable by the mobile device **112,** can trigger the message software interface module to use a particular pre-set criteria **142** to display select communications events in the communications event history. For example, in a mobile device **112** having an integrated date book, when a conference call scheduled in a datebook occurs, processor **122** triggers the communication software interface module **126** with pre-set criteria **142** to preferably select and represent a pending outgoing conference call communications event with higher priority than other select communications events. Alternatively, when mobile device **112** receives a communication, such as an e-mail message, SMS message, WAP page response, voice/video call, processor **122** triggers the communication software interface module **126** with pre-set criteria **142** to preferably select and represent the received communications event with higher priority than other select communications events.

The pre-set criteria can also match communications event data. For instance, to view all communications events sent to or received from a particular contact, the pre-set criteria may include matching select communications event data with all of the specific contact information found in an address book entry for the contact. As an example, consider all communications events sent to or received from a stockbroker. Contact information for the stockbroker is preferably kept in the address book. Preferably, each address book entry contains a variety of fields that can be mapped to one or more communications addresses supported by the mobile device. In the entry corresponding to the stockbroker, for example, if the following fields are defined: telephone number, mobile phone number, fax number, email address, and URL's; then an example preferable mapping to message types follows. The phone, mobile, and fax numbers are mapped to voice and/or video communications events. The mobile number is additionally mapped to an SMS address for SMS type communications events. The email address is mapped to email communications events. The URL's are mapped to corresponding communications event types. For instance an http URL can be mapped to web and/or WAP, whereas an FTP URL (File Transfer Protocol) can be mapped to an ftp communications event. All communications events, including phone calls, SMS communications events, emails, web communications events, WAP communications events or other communications events that match at least one field in the stockbroker contact entry of the address book would then be selected by the communications event software interface module **126,** and would be displayed. Preferably, the presentation of the retrieved data from database **116** would show the contact name, such as "stockbroker" as defined by the preset criteria **142.**

In another embodiment, the communications event software interface module **126** may identify related stored communications events by comparing the communications event data of each stored communications event **128** with keywords selected by the user. This alternative method of matching the current communications event with select stored communications events **128** may be implemented by itself, or as a means of further limiting the select communications events identified by the other methods described above. To continue the previous stockbroker example, further preset criteria can be added to create a further filter that operates on the select communications events, for instance. The communications event data in the new filter may include stock quotes obtained via WAP using an URL as well as notes taken during phone calls with the stockbroker. The user may therefore decide to choose preset criteria that, as well as matching contact information, further matches a regular expression, such as for example, the keywords "buy" or "sell". By allowing the user to configure the pre-set criteria, the communications event software interface module **126** unifies communications events based on pre-set criteria which are important to the user at a specific point in time, for instance, allowing the user to unify a stock pick provided by a stockbroker over a phone call or e-mail with a stock quote retrieved subsequently by the user via WAP in order to take a decision to either communicate a buy, sell, or hold directive to his stockbroker or to a trading system.

Thus far the system of the present invention has been described as integrated in mobile device **112,** it will be understood by one skilled in the art that a software implementation of the present invention can be executed on a number of different platforms, or packaged for use on different platforms. In one such example, a desktop computer can be configured to use the communications event handler of the present invention to provide a communications event history for received email messages. Additionally, the desktop computer may be attached to an SMS modem so that it is capable of receiving SMS messages and can then provide a communications event history to a user to permit the user to determine the context of a received SMS message. Additionally, the desktop computer can be configured so that it is in communication with a Voice-over-Internet-Protocol (VoIP) telephone, so that all incoming and outgoing calls are recorded to the communications event database **116.** In such an implementation, the communications event handler would use a communications event database interface to communicate with either a local or remote communications event database **116** to retrieve the communications event histories associated with correspondents identified using either call display information, or addressing information extracted from the header of an incoming e-mail or SMS message.

The above-described embodiments of the present invention are intended to be examples only. Alterations, modifications and variations may be effected to the particular embodiments by those of skill in the art without departing from the scope of the invention, which is defined solely by the claims appended hereto.

According to a first embodiment there is provided a method of handling a communications event in a mobile device having a user interface, the method comprising: identifying, in a communications event database, a correspondent associated with the communications event; retrieving, from the communications event database, a communications event history associated with the correspondent; and controlling the user interface to provide the retrieved communications event history to a user.

Optionally, for said method, the step of identifying is preceded by the step of determining a communications event type for the communications event, and optionally further the determined communications event type of the communications event is selected from a list including telephony based voice communications events, e-mail communications events, short messaging service communications event and wireless applications protocol communications event. Optionally the user interface is a display, and the step of controlling the user interface includes the step of displaying the retrieved communications event history on the display. Optionally, the step of identifying the correspondent includes one of: extracting a phone number from call display information; extracting an email address from the header of an email message; and extracting an originating address from a SMS message, and further optionally the step of identifying further includes cross referencing one of the extracted phone number, the extracted email address and the extracted originating address, with entries in an address book accessible to the mobile device.

Optionally, the communications event is an incoming communications event, and the method further includes the step of receiving the incoming communications event prior to identifying the correspondent, and further optionally the method includes the step of adding the incoming communications event to the communications event history in the communications event database. Optionally the step of receiving an incoming communications event includes one of: receiving a telephony based phone call; receiving an incoming email message; and receiving an incoming short messaging service (SMS) message, and further optionally the method includes a step of controlling the user interface to provide the user with communications event handling options. Optionally, the step of controlling the user interface includes providing the user an option to either ignore or answer an incoming telephony based call, and further optionally further includes the step of updating the communications event database to reflect a status of the incoming call. Optionally, the step of displaying communications event handling options includes displaying the option to either read or ignore one of the incoming email message and the incoming SMS message and further optionally includes the step of updating the communications event database to reflect the status of one of the incoming email message and the incoming SMS message.

According to a second embodiment there is provided a mobile device, having a user interface and a transceiver for transmitting and receiving communications events, the mobile device comprising: a communications event database, for storing a communications event history associated with a correspondent; and a communications event handler in communication with the communications event database for retrieving from the communications event database the communication event history in response to a communications event, and for controlling the user interface to provide the retrieved communication event history to a user.

Optionally for said mobile device the communications event handler includes a communications event type identifier for identifying the type of the communications event from a list including telephony based voice communications events, e-mail communications events, short messaging service communications event and wireless applications protocol communications event. Optionally the user interface is a display, and the communications event handler includes a display controller for controlling the display to display the retrieved communication event history. Optionally the communications event handler includes a correspondent identifier for identifying the correspondent of an incoming communications event, and further optionally the correspondent identifier is connected to the transceiver for receiving call display information, and includes means for identifying the correspondent of an incoming communications event based on the received call display information, and further optionally the correspondent identifier includes an address book interface for cross-referencing the received call display information with entries in an address book accessible to the mobile device to identify the correspondent.

Optionally for the mobile device the correspondent identifier includes header parsing means for parsing the header of one of a received email message and a received SMS message to extract an originating address, and includes means for identifying the correspondent of an incoming communications event based on the extracted originating address, and further optionally the correspondent identifier includes an address book interface for cross referencing the extracted originating address with entries in an address book accessible to the mobile device to identify the correspondent. Optionally the communications event handler includes a user interface controller for controlling the user interface to provide a user with communications event handling options, and further optionally the communications event handler includes means for updating the communications event database to reflect the status of an incoming call.

According to a third embodiment there is provided a communications event handler for integration in a communication device having a user interface, the communications event handler comprising: a database interface for communicating with a communications event database to retrieve a communications event history associated with a correspondent in response to a communications event; and a user interface controller for receiving the retrieved communications event history from the database interface, and for controlling the user interface to provide the retrieved communication event history to a user.

According to a fourth embodiment there is provided a wireless device, comprising: a viewing screen; a processor; a memory device that stores communication events that have been transmitted or received by the wireless device; and a communication event software interface module executed by the processor that (a) filters each of the communication events stored in the memory device to identify one or more select communication events meeting a pre-set criteria, and (b) displays the one or more select communication events on the viewing screen.

Optionally for said wireless device the communication events include at least one communication event of a type selected from the group comprising: e-mail, SMS, WAP, voice call, instant messaging session, SIP, calendar events, game turns, notes, tasks, and address cards. Optionally the communication events include at least one communication event identifier selected from the group comprising: e-mail address, MSISDN, URI, IP address, PIN, and name. Optionally the pre-set criteria for the one or more select communication events is configurable by a user of the wireless device. Optionally the pre-set criteria for the one or more select communication events comprises a condition that the user has not attended to the communication events. Optionally the communication event software interface module executed by the processor represents and displays the pre-set criteria, and further optionally the pre-set criteria representation comprises the number of unattended messages, or optionally the pre-set criteria representation comprises the type of unattended messages. Optionally the pre-set criteria is a contact matching condition between a contact in an address book and one or more select communication events.

According to a fifth embodiment there is provided a wireless device, comprising: a viewing screen; a processor; a memory device that stores communication events that have been transmitted or received by the wireless device; and a communication event software interface module executed by the processor that (a) locates one or more select communication events by filtering each communication event stored in the memory device to identify stored communication events matching a pre-set criteria, and (b) displays the one or more select communication events on the viewing screen.

Optionally for said wireless device the communication events include at least one communication event of a type selected from the group comprising: e-mail, SMS, WAP, voice call, instant messaging session, SIP, calendar events, game turns, notes, tasks, and address cards. Optionally the communication events include at least one communication event identifier selected from the group comprising: e-mail address, MSISDN, URI, IP address, PIN, and name. Optionally the pre-set criteria is configurable by a user of the wireless device. Optionally each stored communication event comprises ordinal values indicating the sequence in which the stored communication events were transmitted or received by the wireless device. Optionally each stored communication event comprises a time-stamp indicating the date the stored communication events were transmitted or received by the wireless device, and further optionally the time-stamp further indicates the time the stored communication events were transmitted or received by the wireless device. Optionally the communication event software interface module represents and displays the pre-set criteria on the viewing screen.

According to a sixth embodiment there is provided a method for displaying communication events on a wireless device unifying one or more of a plurality of stored communication events, comprising the steps of: filtering each stored communication event to identify one or more select communication events meeting a pre-set criteria; and displaying the one or more select communication events meeting the pre-set criteria. Optionally the communication events, include at least one communication event of a type selected from the group comprising: e-mail, SMS, WAP, voice call, instant messaging session, SIP, calendar events, game turns, notes, tasks, and address cards. Optionally the communication events include at least one communication event identifier selected from the group comprising: e-mail address, MSISDN, URI, IP address, PIN, and name. Optionally the pre-set criteria for the one or more select communication events is configurable by a user of the wireless device. Optionally the pre-set criteria requires the one or more select communication events to each have been transmitted or received by a contact selected by a user of the wireless device. Optionally the pre-set criteria requires the one or more select communication events to each have been unattended by the user.

According to a seventh embodiment there is provided a method for displaying one or more communication events on a wireless device, comprising the steps of: identifying indexing data for each stored communication event; identifying current indexing data for the pre-set criteria; comparing the current indexing data with the indexing data for each stored communication event to identify select communication events having indexing data that falls within a pre-set storage proximity range from the current indexing data; and displaying the select communication events identified as having indexing data falling within the pre-set storage proximity range. Optionally the communication events include at least one communication event of a type selected from the group comprising-mail, SMS, WAP, voice call, instant messaging session, SIP, calendar events, game turns, notes, tasks, and address cards. Optionally the communication events include at least one communication event identifier selected from the group comprising: e-mail address, MSISDN, URI, IP address, PIN, and name. Optionally the pre-set storage proximity range is configurable by a user of the wireless device. Optionally the current indexing data and the indexing data for each stored communication event are ordinal values. Optionally the current indexing data and the indexing data for each stored communication event are time-stamps.

According to an eighth embodiment there is provided a method for displaying a current communication event on a wireless device unified with one or more of a plurality of stored communication events, comprising the steps of : providing pre-set criteria; comparing the each stored communication, event with the pre-set criteria; and displaying the current communication event on a viewing screen along with each of the stored communication events which match the pre-set criteria. Optionally the communication events include at least one communication event of a type selected from the group comprising: e-mail, SMS, WAP, voice call, instant messaging session, SIP, calendar events, game turns, notes, tasks, and address cards. Optionally the communication events include at least one communication event identifier selected from the group comprising: e-mail address, MSISDN, URI, IP address, PIN, and name. Optionally the method further comprises the further step of: displaying a representation of the pre-set criteria on the viewing screen.

## Claims

1. A wireless device (112), comprising:
a viewing screen (120);
a processor (112);
a memory device (116) arranged to store communication events that have been transmitted or received by the wireless device (112), and a status of the communication event; and
a communication event software interface module (126) executable by the processor (112) wherein said communication event software interface module (126) is arranged to (a) filter each of the communication events stored in the memory device to identify one or more select communication events meeting a pre-set criteria by comparison of the criteria with the status, and (b) display the one or more select communication events on the viewing screen (120), wherein the pre-set criteria for the one or more select communication events is configurable by a user of the wireless device (112) and comprises a condition that the user has not attended to the communication events.

2. The wireless device (112) of claim 1, wherein the communication events include at least one communication event of a type (132) selected from the group comprising: email, SMS, voice call, instant messaging session, calendar events, game turns, andtasks.

3. The wireless device (112) of claim 1, wherein the communication events include at least one communication event identifier selected from the group comprising: e-mail address, MSISDN, URI, IP address, PIN, and name.

4. The wireless device (112) of claim 1, wherein the communication event software interface module (126) executed by the processor represents and displays the pre-set criteria.

5. The wireless device (112) of claim 4, wherein the pre-set criteria representation comprises the number of unattended messages.

6. The wireless device (112) of claim 4, wherein the pre-set criteria representation comprises the type (132) of unattended messages.

7. The wireless device (112) of claim 1, wherein the pre-set criteria is a contact matching condition between a contact in an address book and one or more select communication events.

8. A method for displaying communication events on a wireless device (112) unifying one or more of a plurality of stored communication events having a status, comprising the steps
of:
filtering each stored communication event to identify one or more select communication events meeting a pre-set criteria (148) by comparison of the criteria with the status; and
displaying the one or more select communication events meeting the pre-set criteria; and
wherein the pre-set criteria for the one or more select communication events is configurable by a user of the wireless device (112) and requires the one or more select communication events to each have been unattended by the user.

9. The wireless device (112) of claim 8, wherein the communication events, include at least one communication event of a type (132) selected from the group comprising: email, SMS, voice call, instant messaging session, calendar events, game turns, and tasks.

10. The wireless device (112) of claim 8, wherein the communication events include at least one communication event identifier selected from the group comprising: e-mail address, MSISDN, URI, IP address, PIN, and name.

11. The method of claim8, wherein the pre-set criteria requires the one or more select communication events to each have been transmitted or received by a contact selected by a user of the wireless device (112).

12. The method of claim 8 wherein the step of filtering comprises:
identifying indexing data for each stored communication event;
identifying current indexing data for the pre-set criteria;
comparing the current indexing data with the indexing data for each stored communication event to identify select communication events having indexing data that falls within a pre-set storage proximity range from the current indexing data.

13. The method of claim 12 wherein the step of displaying comprises:
displaying the select communication events identified as having indexing data falling within the pre-set storage proximity range.

14. The method of claim 12 or claim 13, wherein the communication events include at least one communication event of a type (132) selected from the group comprising: e-mail, SMS, voice call, instant messaging session, calendar events, game tumsand tasks.

15. The method of claim 12 or claim 3, wherein the communication events include at least one communication event identifier selected from the group comprising: e-mail address, MSISDN, URI, IP address, PIN, and name.

16. The method of claim 12 or claim 13, wherein the pre-set storage proximity range is configurable by a user of the wireless device (112).

17. The method of claim 12 or claim 13, wherein the current indexing data and the indexing data for each stored communication event are ordinal values.

18. The method of claim 12 or claim 13, wherein the current indexing data and the Indexing data for each stored communication event are time-stamps.

19. The method of claim 8 wherein the step of filtering comprises:
providing pre-set criteria (142); and
comparing the each stored communication, event with the pre-set criteria (148).

20. The method of claim 19 wherein the step of displaying comprises:
displaying the current communication event on a viewing screen (120) along with each of the stored communication events which match the pre-set criteria.

21. The method of claim 19 or claim 20, wherein the communication events include at least one communication event of a type (132) selected from the group comprising: e-mail, SMS, voice call, instant messaging session, calendar events, game turnsand tasks.

22. The method of claim 19 or claim 20, wherein the communication events include at least one communication event identifier selected from the group comprising: e-mail address, MSISDN, URI, IP address, PIN, and name.

23. The method of claim 19 or claim 20, comprising the further step of:
displaying a representation of the pre-set criteria on the viewing screen (120).

## Patentansprüche

1. Eine drahtlose Vorrichtung (112), die aufweist:
einen Anzeigebildschirm (120);
einen Prozessor (112);
eine Speichervorrichtung (116), die ausgebildet ist zum Speichern von Kommunikationsereignissen, die von der drahtlosen Vorrichtung (112) gesendet oder empfangen wurden, und eines Status des Kommunikationsereignisses; und
ein Kommunikationsereignis-Software-Schnittstellenmodul (126), das durch den Prozessor (112) ausführbar ist, wobei das Kommunikationsereignis-Software-Schnittstellen-Modul (126) ausgebildet ist zum (a) Filtern jedes der Kommunikationsereignisse, die in der Speichervorrichtung gespeichert sind, um ein oder mehrere ausgewählte Kommunikationsereignisse zu identifizieren, die ein voreingestelltes Kriterium erfüllen, durch Vergleich des Kriteriums mit dem Status, und (b) Anzeigen des einen oder mehrerer ausgewählter
Kommunikationsereignisse auf dem Anzeigebildschirm (120), wobei das voreingestellte Kriterium für das eine oder mehrere ausgewählte Kommunikationsereignis(se) durch einen Benutzer der drahtlosen Vorrichtung (112) konfigurierbar ist und eine Bedingung aufweist, dass der Benutzer Kommunikationsereignisse nicht berücksichtigt hat.

2. Die drahtlose Vorrichtung (112) gemäß Anspruch 1, wobei die Kommunikationsereignisse zumindest ein Kommunikationsereignis eines Typs (132) umfassen, der aus der Gruppe ausgewählt ist, die aufweist:
Email, SMS, Sprachanruf, Instant-Messaging-Sitzung, Kalenderereignisse, Spielrunden und Aufgaben.

3. Die drahtlose Vorrichtung (112) gemäß Anspruch 1, wobei die Kommunikationsereignisse zumindest einen Kommunikationsereignis-Identifizierer umfassen, der aus der Gruppe ausgewählt ist, die aufweist:
Email-Adresse, MSISDN, URI, IP-Adresse, PIN und Namen.

4. Die drahtlose Vorrichtung (112) gemäß Anspruch 1, wobei das Kommunikationsereignis-Software-Schnittstellenmodul (126), das von dem Prozessor ausgeführt wird, das voreingestellte Kriterium repräsentiert und anzeigt.

5. Die drahtlose Vorrichtung (112) gemäß Anspruch 4, wobei die Repräsentation des voreingestellten Kriteriums die Anzahl von unberücksichtigten Nachrichten aufweist.

6. Die drahtlose Vorrichtung (112) gemäß Anspruch 4, wobei die Repräsentation des voreingestellten Kriteriums den Typ (132) von unberücksichtigten Nachrichten aufweist.

7. Die drahtlose Vorrichtung (112) gemäß Anspruch 1, wobei das voreingestellte Kriterium eine Kontakt-Anpassungs-Bedingung zwischen einem Kontakt in einem Adressbuch und einem oder mehreren ausgewählten Kommunikationsereignissen ist.

8. Ein Verfahren zum Anzeigen von Kommunikationsereignissen auf einer drahtlosen Vorrichtung (112), das ein oder mehrere einer Vielzahl von gespeicherten Kommunikationsereignissen mit einem Status vereinigt, das die Schritte aufweist:
Filtern jedes gespeicherten Kommunikationsereignisses, um ein oder
mehrere ausgewählte Kommunikationsereignisse zu identifizieren, die ein voreingestelltes Kriterium (148) erfüllen, durch Vergleich des Kriteriums mit dem Status; und
Anzeigen des einen oder mehrerer ausgewählter Kommunikationsereignisse, das/die das voreingestellte Kriterium erfüllt/erfüllen; und
wobei das voreingestellte Kriterium für das eine oder mehrere ausgewählte Kommunikationsereignis(se) durch einen Benutzer der drahtlosen Vorrichtung (112) konfigurierbar ist und erfordert, dass das eine oder mehrere Kommunikationsereignis(se) jeweils von dem Benutzer nicht berücksichtigt wurden.

9. Die drahtlose Vorrichtung (112) gemäß Anspruch 8, wobei die Kommunikationsereignisse zumindest ein Kommunikationsereignis eines Typs (132) umfassen, der aus der Gruppe ausgewählt ist, die aufweist:
Email, SMS, Sprachanruf, Instant-Messaging-Sitzung, Kalenderereignisse, Spielrunden und Aufgaben.

10. Die drahtlose Vorrichtung (112) gemäß Anspruch 8, wobei die Kommunikationsereignisse zumindest einen Kommunikationsereignis-Identifizierer umfassen, der aus der Gruppe ausgewählt ist, die aufweist:
Email-Adresse, MSISDN, URI, IP-Adresse, PIN und Namen.

11. Das Verfahren gemäß Anspruch 8, wobei das voreingestellte Kriterium erfordert, dass das eine oder mehrere ausgewählte Kommunikationsereignis(se) von einem Kontakt gesendet oder empfangen wurden, der von einem Benutzer der drahtlosen Vorrichtung (112) ausgewählt wird.

12. Das Verfahren gemäß Anspruch 8, wobei der Schritt des Filterns aufweist:
Identifizieren von Indizierungsdaten für jedes gespeicherte Kommunikationsereignis;
Identifizieren aktueller Indizierungsdaten für das voreingestellte Kriterium;
Vergleichen der aktuellen Indizierungsdaten mit den Indizierungsdaten für jedes gespeicherte Kommunikationsereignis, um ausgewählte Kommunikationsereignisse auszuwählen, die Indizierungsdaten haben, die in einen voreingestellten Speicher-Nähe-Bereich der aktuellen Indizierungsdaten fallen.

13. Das Verfahren gemäß Anspruch 12, wobei der Schritt des Anzeigens aufweist:
Anzeigen der ausgewählten Kommunikationsereignisse, die identifiziert sind mit Indizierungsdaten, die in den voreingestellten Speicher-Nähe-Bereich fallen.

14. Das Verfahren gemäß Anspruch 12 oder Anspruch 13, wobei die Kommunikationsereignisse zumindest ein Kommunikationsereignis eines Typs (132) umfassen, der aus der Gruppe ausgewählt ist, die aufweist:
Email, SMS, Sprachanruf, Instant-Messaging-Sitzung, Kalenderereignisse, Spielrunden und Aufgaben.

15. Das Verfahren gemäß Anspruch 12 oder Anspruch 3, wobei die Kommunikationsereignisse zumindest einen Kommunikationsereignis-Identifizierer umfassen, der aus der Gruppe ausgewählt ist, die aufweist:
Email-Adresse, MSISDN, URI, IP-Adresse, PIN und Namen.

16. Das Verfahren gemäß Anspruch 12 oder Anspruch 13, wobei der voreingestellte Speicher-Nähe-Bereich durch einen Benutzer der drahtlosen Vorrichtung (112) konfigurierbar ist.

17. Das Verfahren gemäß Anspruch 12 oder Anspruch 13, wobei die aktuellen Indizierungsdaten und die Indizierungsdaten für jedes gespeicherte Kommunikationsereignis Ordinalwerte sind.

18. Das Verfahren gemäß Anspruch 12 oder Anspruch 13, wobei die aktuellen Indizierungsdaten und die Indizierungsdaten für jedes gespeicherte Kommunikationsereignis Zeitstempel sind.

19. Das Verfahren gemäß Anspruch 8, wobei der Schritt des Filterns aufweist:
Vorsehen eines voreingestellten Kriteriums (142); und
Vergleichen jedes gespeicherten Kommunikationsereignisses mit dem voreingestellten Kriterium (148).

20. Das Verfahren gemäß Anspruch 19, wobei der Schritt des Anzeigens aufweist:
Anzeigen des aktuellen Kommunikationsereignisses auf einem Anzeigebildschirm (120) zusammen mit jedem der gespeicherten Kommunikationsereignisse, der das voreingestellte Kriterium erfüllt.

21. Das Verfahren gemäß Anspruch 19 oder Anspruch 20, wobei die Kommunikationsereignisse zumindest ein Kommunikationsereignis eines Typs (132) umfassen, der aus der Gruppe ausgewählt ist, die aufweist:
Email, SMS, Sprachanruf, Instant-Messaging-Sitzung, Kalenderereignisse, Spielrunden und Aufgaben.

22. Das Verfahren gemäß Anspruch 19 oder Anspruch 20, wobei die Kommunikationsereignisse zumindest einen Kommunikationsereignis-Identifizierer umfassen, der aus der Gruppe ausgewählt ist, die aufweist:
Email-Adresse, MSISDN, URI, IP-Adresse, PIN und Namen.

23. Das Verfahren gemäß Anspruch 19 oder Anspruch 20, das den weiteren Schritt aufweist:
Anzeigen einer Repräsentation des voreingestellte Kriteriums auf dem Anzeigebildschirm (120).

## Revendications

1. Dispositif sans fil (112), comprenant :
un écran (120) ;
un processeur (112) ;
un dispositif de mémoire (116) agencé pour stocker des événements de communication qui ont été transmis au, ou reçus par, le dispositif sans fil (112), et un état de l'événement de communication, et
un module d'interface logicielle d'événements de communication (126) exécutable par le processeur (112), ledit module d'interface logicielle d'événements de communication (126) étant agencé pour (a) filtrer chacun des événements de communication stockés dans le dispositif de mémoire afin d'identifier un ou plusieurs événements de communication de sélection satisfaisant à un critère prédéfini par comparaison du critère avec l'état, et (b) afficher le ou les événements de communication de sélection sur l'écran (120), le critère prédéfini pour le ou les événements de communication étant configurable par un utilisateur du dispositif sans fil (112) et comprenant une condition où l'utilisateur n'a pas surveillé les événements de communication.

2. Dispositif sans fil (112) selon la revendication 1, dans lequel les événements de communication comprennent au moins un événement de communication d'un type (132) sélectionné dans le groupe consistant en : courrier électronique, SMS, appel vocal, session de messagerie instantanée, événements du calendrier, tours de jeu et tâches.

3. Dispositif sans fil (112) selon la revendication 1, dans lequel les événements de communication comprennent au moins un identificateur d'événements de communication sélectionné dans le groupe consistant en : adresse de courrier électronique, MSISDN, URI, adresse IP, PIN et nom.

4. Dispositif sans fil (112) selon la revendication 1, dans lequel le module d'interface logicielle d'événements de communication (126) exécuté par le processeur représente et affiche le critère prédéfini.

5. Dispositif sans fil (112) selon la revendication 4, dans lequel la représentation de critère prédéfini comprend le nombre de messages non surveillés.

6. Dispositif sans fil (112) selon la revendication 4, dans lequel la représentation de critère prédéfini comprend le type (132) de messages non surveillés.

7. Dispositif sans fil (112) selon la revendication 1, dans lequel le critère prédéfini est une condition de concordance de contact entre un contact dans un carnet d'adresses et un ou plusieurs événements de communication de sélection.

8. Procédé pour afficher des événements de communication sur un dispositif sans fil (112) unifiant un ou plusieurs événements de communication stockés ayant un état, comprenant les étapes consistant à :
filtrer chaque événement de communication stocké pour identifier un ou plusieurs événements de communication de sélection satisfaisant à un critère prédéfini (148) par comparaison du critère avec l'état ; et
afficher le ou les événements de communication de sélection satisfaisant au critère prédéfini ; et
le critère prédéfini pour le ou les événements de communication de sélection étant configurable par un utilisateur du dispositif sans fil (112) et requérant que le ou les événements de communication de sélection aient été non surveillés par l'utilisateur.

9. Dispositif sans fil (112) selon la revendication 8, dans lequel les événements de communication comprennent au moins un événement de communication d'un type (132) sélectionné dans le groupe consistant en : courrier électronique, SMS, appel vocal, session de messagerie instantanée, événements du calendrier, tours de jeu et tâches.

10. Dispositif sans fil (112) selon la revendication 8, dans lequel les événements de communication comprennent au moins un identificateur d'événements de communication sélectionné dans le groupe consistant en : adresse de courrier électronique, MSISDN, URI, adresse IP, PIN et nom.

11. Procédé selon la revendication 8, dans lequel le critère prédéfini requiert que le ou les événements de communication de sélection aient chacun été transmis ou reçus par un contact sélectionné par un utilisateur du dispositif sans fil (112).

12. Procédé selon la revendication 8, dans lequel l'étape de filtrage comprend :
l'identification de données d'indexation pour chaque événement de communication stocké ;
l'identification de données d'indexation en cours pour le critère prédéfini ;
la comparaison des données d'indexation en cours avec les données d'indexation pour chaque événement de communication stocké afin d'identifier les événements de communication de sélection ayant des données d'indexation qui entrent dans une plage de proximité de stockage prédéfinie à partir des données d'indexation en cours.

13. Procédé selon la revendication 12, dans lequel l'étape d'affichage comprend :
l'affichage des événements de communication de sélection identifiés comme ayant des données d'indexation entrant dans la plage de proximité de stockage prédéfinie.

14. Procédé selon la revendication 12 ou la revendication 13, dans lequel les événements de communication comprennent au moins un événement de communication d'un type (132) sélectionné dans le groupe consistant en : courrier électronique, SMS, appel vocal, session de messagerie instantanée, événements du calendrier, tours de jeu et tâches.

15. Procédé selon la revendication 12 ou la revendication 3, dans lequel les événements de communication comprennent au moins un identificateur d'événements de communication sélectionné dans le groupe consistant en : adresse de courrier électronique, MSISDN, URI, adresse IP, PIN et nom.

16. Procédé selon la revendication 12 ou la revendication 13, dans lequel la plage de proximité de stockage prédéfinie est configurable par un utilisateur du dispositif sans fil (112).

17. Procédé selon la revendication 12 ou la revendication 13, dans lequel les données d'indexation en cours et les données d'indexation pour chaque événement de communication stocké sont des valeurs ordinales.

18. Procédé selon la revendication 12 ou la revendication 13, dans lequel les données d'indexation en cours et les données d'indexation pour chaque événement de communication stocké sont des estampilles temporelles.

19. Procédé selon la revendication 8, dans lequel l'étape de filtrage comprend les étapes consistant à :
fournir des critères prédéfinis (142) ; et
comparer chaque événement de communication stocké avec le critère prédéfini (148).

20. Procédé selon la revendication 19, dans lequel l'étape d'affichage comprend :
l'affichage de l'événement de communication en cours sur un écran (120) conjointement à chacun des événements de communication stockés qui concordent avec les critères prédéfinis.

21. Procédé selon la revendication 19 ou la revendication 20, dans lequel les événements de communication comprennent au moins un événement de communication d'un type (132) sélectionné dans le groupe consistant en : courrier électronique, SMS, appel vocal, session de messagerie instantanée, événements du calendrier, tours de jeu et tâches.

22. Procédé selon la revendication 19 ou la revendication 20, dans lequel les événements de communication comprennent au moins un identificateur d'événements de communication sélectionné dans le groupe consistant en : adresse de courrier électronique, MSISDN, URI, adresse IP, PIN et nom.

23. Procédé selon la revendication 19 ou la revendication 20, comprenant l'étape supplémentaire consistant à :
afficher une représentation du critère prédéfini sur l'écran (120).
